**Europäisches Patentamt**

**European Patent Office**

**Office européen des brevets**

(11) Veröffentlichungsnummer : **0 317 491 B1**

(12) **EUROPÄISCHE PATENTSCHRIFT**

(45) Veröffentlichungstag der Patentschrift :
**11.03.92 Patentblatt 92/11**

(21) Anmeldenummer : **88730247.9**

(22) Anmeldetag : **10.11.88**

(51) Int. Cl.⁵ : **B25J 5/04,** B23Q 1/26, B66C 6/00

(54) **Tragprofil.**

(30) Priorität : **13.11.87 DE 3739090**

(43) Veröffentlichungstag der Anmeldung :
**24.05.89 Patentblatt 89/21**

(45) Bekanntmachung des Hinweises auf die Patenterteilung :
**11.03.92 Patentblatt 92/11**

(84) Benannte Vertragsstaaten :
**AT CH FR GB IT LI SE**

(56) Entgegenhaltungen :
**EP-A- 0 234 382**
**DE-A- 3 629 367**
**DE-U- 8 601 444**
**FR-A- 2 320 493**
**GB-A- 1 036 903**
**GB-A- 1 266 910**
**GB-A- 2 089 881**

(73) Patentinhaber : **MANNESMANN Aktiengesellschaft**
**Mannesmannufer 2**
**W-4000 Düsseldorf 1 (DE)**

(72) Erfinder : **Staggl, Roland**
**Brunnenweg 6**
**W-5802 Wetter 2 (DE)**
Erfinder : **Sprung, Hartwig**
**Am Brasberg 71**
**W-5802 Wetter 4 (DE)**
Erfinder : **Becker, Eberhard, Dipl.-Ing.**
**Max-Planck-Strasse 60**
**W-5800 Hagen 1 (DE)**

(74) Vertreter : **Meissner, Peter E., Dipl.-Ing. et al**
**Patentanwaltsbüro Meissner & Meissner,**
**Herbertstrasse 22**
**W-1000 Berlin 33 (DE)**

EP 0 317 491 B1

## Beschreibung

Die Erfindung betrifft ein Tragprofil mit Führungsschienen, die an dem Tragprofil zugeordneten Flanschen gehalten sind.

Bei einem derartigen Tragprofil nach der DE-OS 35 10 051 sind die Führungsschienen für die Fahrwerke eines Industrieroboters mit Verbindungsflanschen des Tragprofils verschraubt. Da auch Führungsschienen aus hochfestem und gehärtetem Material hergestellt sind, ist das Bohren für die Schrauben äußerst schwierig.

Aufgabe der Erfindung ist es daher, das Anbringen der Führungsschienen an das Tragprofil zu vereinfachen. Diese Aufgabe wird durch die Merkmalskombination des Anspruchs 1 gelöst.

Die in die T-Nuten eingesetzten Klemmelemente drücken mit ihren Klemmdruckflächen nur auf die Druckflächen der Schienen. Die auf die Druckflächen wirkenden Kräfte liegen mit ihren Wirkungslinien zwischen den Auflageflächen des Tragprofils, so daß die von Schrauben oder dergl. aufgebrachten Druckkräfte von den Klemmelementen über die auf beiden Seiten der Verbindungslinie liegenden Auflageflächen auf die Schienen übertragen werden. Dies gibt eindeutige Kraftverläufe, die die Schienen einwandfrei festhalten und bei Belastung ein Verkanten verhindern. So können Schienen mit einfachen Mitteln ohne Bohrarbeiten am Tragprofil befestigt werden und bilden eine einwandfreie Führung für z.B. einen Industrieroboter, für dessen genaue Positionierung an den Führungsschienen kein Versatz von 0,1 mm vorhanden sein darf. Zwischen der Unterkante des Tragprofils und der Oberkante der Schienen ist ein Freiraum für Laufrollen vorhanden.

In weiterer Ausgestaltung der Erfindung sind die Klemmelemente als sog. Nutensteine oder Klemmschienen ausgebildet, wovon jeweils eines eine Verdrehsicherung für den Kopf der Schraube oder die Mutter haben kann. Die Auflageflächen der Klemmelemente können zur Innenseite hin durch Freiräume begrenzt sein. Tragprofil und Halteprofil können mit Anschlagkanten für die Schiene versehen sein. In den Freiraum kann das Klemmelement beim Durchbiegen ausweichen, so daß auch unter diesen Umständen ein einwandfreier Kraftverlauf für die Klemmteile gegeben ist.

Die Halteschienen können neben oder gegenüber den Druckflächen für Schienen ein nach außen offenes U-Profil zur Aufnahme von Anbauteilen, wie z.B. Zahnstangen, Steuernocken, Endschaltern und Sensoren für z.B. einen Industrieroboter haben. Das U-Profil bildet eine Verstärkung für die Halteschiene, so daß die Nutensteine und Schrauben nur in Abständen von etwa 200 mm vorhanden sein müssen, um die Schienen zuverlässig einzuklemmen.

Die Schienen können Schienen aus Stahl oder Nichteisenmetall sein. Geringfügige Dickentoleranzen der Führungsschienen sowie Parallelitätsabweichungen der Auflageflächen können durch Verlagerung und Verformung der Klemmelemente unter Beibehaltung des einwandfreien Festhaltens der Schiene ausgeglichen werden. Von den Klemmelementen kann jeweils eines mit einem Langloch für die Schraube versehen sein.

In weiterer Ausgestaltung der Erfindung kann das Tragprofil auf der den Führungsschienen gegenüberliegenden Seite Einschiebenuten für Nutensteine zum Anklemmen von Kompensationsprofilen oder dergl. haben, das auch ein Kabelschleppträger sein kann. Das Kompensationsprofil sollte möglichst aus gleichem Werkstoff wie die Schienen hergestellt sein und auch die gleiche Querschnittsfläche haben, um bei etwaigen Temperaturschwankungen ein Verziehen des Tragprofils durch einseitige Beeinflussung von den Führungsschienen zu verhindern. Diese Maßnahme muß aber nur dort getroffen werden, wo aus Genauigkeitsgründen das Verziehen des Tragprofils durch Temperaturschwankungen auf ein Minimum beschränkt werden soll oder gar nicht vorhanden sein darf.

Mehrere Ausführungsbeispiele der Erfindung sind in den Zeichnungen dargestellt und im folgenden erläutert. Es zeigen:

Fig. 1 eine perspektivische Darstellung eines Industrieroboters in Portalbauweise mit den erfindungsgemäßen Tragprofilen,

Fig. 2 einen Querschnitt durch das Tragprofil,

Fig. 3 einen Kraftverlauf durch die Schienenbefestigung.

Fig. 4 einen Ausschnitt aus Fig. 2 in größerem Maßstab,

Fig. 5 Querschnitte durch andere Schienenbefestigungen.

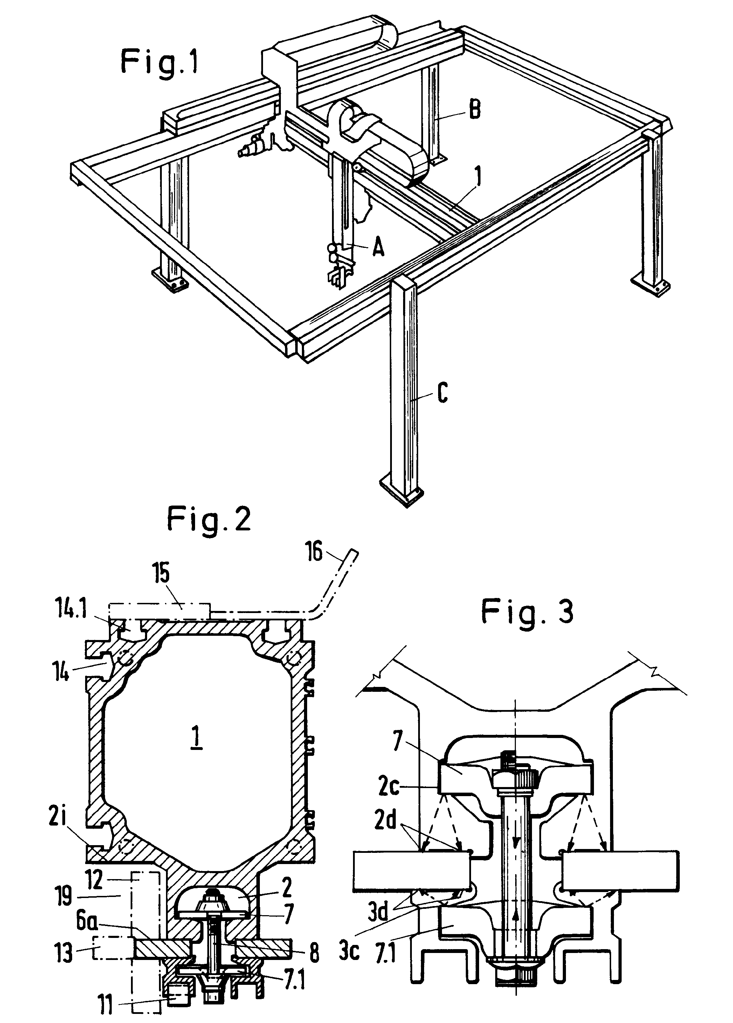

Sowohl der in Fig. 1 erkennbare Industrieroboter A als auch sein Träger B verfährt an Tragprofilen 1, die unten in Fig. 2 gezeichnete, in Einschiebenuten 2 gehaltene Führungsschienen 6 für Laufräder 12 und Führungsrollen 13 des Industrieroboters A bzw. Trägers B haben. Die Tragprofile 1 haben ferner in Fig. 2 erkennbare einfache Einschiebenuten 14 für Nutensteine, mit denen die Tragprofile 1 mit Stützen C des Portals verbunden sind. An oberen Einschiebenuten 14.1 des Tragprofils 1 kann ein strichpunktiert gezeichnetes Kompensationsprofil 15 in Form eines Kabelschleppträgers 16 befestigt sein. Es verhindert zusammen mit den Schienen 6 temperaturbedingte Verformungen des Tragprofils.

Beim Betrachten der in Fig. 2 erkennbaren Befestigung der Führungs-Schienen 6 am Tragprofil 1 kann man ermessen, daß bei einer Belastungssituation nach Fig. 1 und den eingangs geschilderten Präzisionsanforderungen an die Befestigung der Führungs-Schienen 6 mittels der Klemmelemente 7 und 7.1 und dem dazwischen liegenden eindeutigen Kraftverlauf größte Anforderungen gestellt werden.

Der von den Schrauben 8 zwischen den Klemmelementen 7 und 7.1 verlaufende, über die Auflageflächen 2d und 3d aufgeteilte Kraftfluß ist in Fig. 3 durch strichpunktierte Linien angedeutet. Die Verbindungslinie von der Druckfläche 2c nach der Druckfläche 3c verläuft zwischen den Auflageflächen 2d und 3d, so daß die Schiene 6 jeweils zwischen einer doppelten Zweipunktauflage sicher und kippfrei gehalten ist.

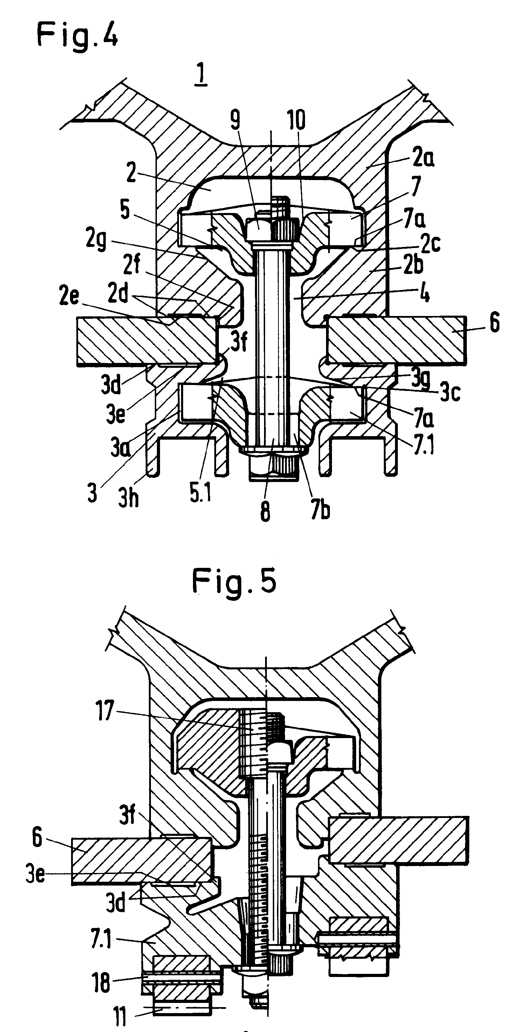

Die in Fig. 4 vergrößert gezeichnete Einschiebenut 2 hat seitliche Nutenstege 2a und daran anschließende Klemmflansche 2b, zwischen denen ein Schlitz 4 für die Schrauben 8 vorhanden ist. Die Klemmflansche 2b haben auf der Oberseite Druckflächen 2c und daneben Abschrägungen 2g, so daß zwischen den Klemmdruckflächen 7a der Klemmelemente 7 und den Klemmflanschen 2b ein Freiraum 5 vorhanden ist. Die Klemmflansche 2b haben an der Unterseite auf beiden Seiten Auflageflächen 2d für die Schienen 6, dazwischen eine Ausnehmung 2e und daneben eine Anschlagkante 2f für die Schiene 6. Die beiden nebeneinander liegenden Schienen 6 werden von unteren Klemmelementen 7.1 gehalten, die in mit Druckflächen 3c versehene Einschiebenuten 3a der Halteschienen 3 eingreifen, die ebenfalls zum Bilden eines Freiraumes 5.1 neben der Klemmdruckfläche 7a Abschrägungen 3g für die Gegen-Klemmelemente 7.1 und zwischen Auflageflächen 3d Ausnehmungen 3e und daneben Anschlagkanten 3f für die Schienen 6 haben. Die Halteschienen 3 haben auch U-Profile 3h für in den Figuren 2 und 5 gezeichnete Antriebsschienen 11. Die Klemmelemente 7 und 7.1 werden von den Schrauben 8 gedrückt und pressen die Schienen 6 zwischen die gegenüberliegenden Druckflächen 2d und 3d ein.

Die Muttern 9 für die Schrauben 8 sind Setzmuttern oder einfache Muttern, die als Verdrehsicherung 10 eine Sechskantvertiefung im Klemmelement 7 haben. Das Klemmelement 7.1 hat zusätzlich ein Langloch 7b für die Schraube 8 zum Ausgleich von Toleranzen und Abweichungen.

Beim Ausführungsbeispiel nach Fig. 5 ist das Klemmelement 7.1 alternativ aus zwei verschiedene Schienen ausgebildet. Diese haben ebenfalls zwischen Auflageflächen 3d eine Ausnehmung 3e und eine Anschlagkante 3f für die Führungsschiene 6. In den Klemmelementen 7.1 sind Antriebsschienen 11 mittels Spannhülsen 18 befestigt. Anstelle der Mutter kann auch ein Gewindeeinsatz 17 vorhanden sein.

**Patentansprüche**

1. Tragprofil mit Führungsschienen, die an dem Tragprofil zugeordneten Flanschen gehalten sind, dadurch gekennzeichnet, daß die Flansche (2b) eine T-förmige Einschiebenut (2) für ein erstes Klemmelement (7) bilden, daß ein zweites Klemmelement (7.1) in einander zugewandten, an jeweils einer Halteschiene (3) angeordnete Einschiebenuten (3a) eingreift, daß beide Klemmelemente (7, 7.1) über eine mittig angeordnete Schraube (8) verbunden sind und zwei Führungsschienen (6) zwischen je einem Flansch (2b) und einer Halteschiene (3) einspannen, wobei die Auflager für die Führungsschienen (6) durch jeweils sowohl an den Flanschen (2b) als auch an den Halteschienen (3) im Abstand voneinander angeordneten Auflageflächen (2d, 3d) gebildet sind und daß das Klemmelement (7) in der T-förmige Einschiebenut (2) und das Klemmelement (7.1) in der Einschiebenut (3a) der Halteschienen (3) jeweils auf schmalen Druckflächen (2c, 3c) aufliegt, deren gerade Verbindungslinie von einander gegenüberliegenden Druckflächen zwischen den Auflagerflächen (2d bzw. 3d) verläuft.

2. Tragprofil nach Anspruch 1, dadurch gekennzeichnet, daß zwischen dem Tragprofil (1) und den Führungsschienen (6) ein Freiraum (19) für Laufrollen (12) vorhanden ist.

3. Tragprofil nach Anspruch 1 oder 2, dadurch gekennzeichnet, daß die Klemmenlemente (7, 7.1) Nutensteine sind.

4. Tragprofil nach Anspruch 1 oder 2, dadurch gekennzeichnet, daß die Klemmenlemente (7, 7.1) als Schienen oder Schieneustücke ausgebildet sind.

5. Tragprofil nach einem der Ansprüche 1 bis 4, dadurch gekennzeichnet, daß eines der sich gegenüberliegenden Klemmelemente (7, 7.1) eine Verdrehsicherung (10) für den Kopf einer Schraube (8) oder eine Mutter (9) hat.

6. Tragprofil nach einem der Ansprüche 1 bis 5, dadurch gekennzeichnet, daß das Tragprofil (1) und die Halteschienen (3) jeweils mit Auschlagkanten (2f, 3f) für die Führungsschienen (6) versehen sind.

7. Tragprofil nach einem der Ansprüche 1 bis 6, dadurch gekennzeichnet, daß die Führungsschiene (6) vorzugsweise gehärtet und geschliffen bzw. vergütet und gezogen oder vergütet oder gezogen ist.

8. Tragprofil nach einem der Ansprüche 1 bis 7, dadurch gekennzeichnet, daß eines der Klemmelemente (7 bzw. 7.1) ein quer zur T-förmigen Einschiebenut (2) angeordnetes Langloch (7b) für die Schrauben (8) hat.

EP 0 317 491 B1

**Claims**

1. A carrier profile comprising guide rails which are fixed to flanges assigned to the carrier profile, characterised in that the flanges (2b) form a T-shaped insertion groove (2) for a first clamping element (7), that a second clamping element (7.1) engages into insertion grooves (3a) which face towards one another and are in each case disposed on a holding rail (3), that both of the clamping elements (7, 7.1) are connected via a centrally arranged screw (8) and clamp two guide rails (6) between a respective flange (2b) and a holding rail (3), where the bearings for the guide rails (6) are formed by bearing surfaces (2d, 3d) arranged, at a distance from one another, both on the flanges (2b) and on the holding rails (3), and that the clamping element (7) in the T-shaped insertion groove (2) and the clamping element (7.1) in the insertion groove (3a) of the holding rails (3) bear against respective narrow pressure surfaces (2c, 3c), where the straight connecting line of pressure surfaces, disposed opposite one another, extends between the bearing surfaces (2d, 3d).

2. A carrier profile as claimed in Claim 1, characterised in that a free space (19) for rollers (12) is present between the carrier profile (1) and the guide rails (6).

3. A carrier profile as claimed in Claim 1 or 2, characterised in that the clamping elements (7, 7.1) are sliding blocks.

4. A carrier profile as claimed in Claim 1 or 2, characterised in that the clamping elements (7, 7.1) have the form of rails or rail components.

5. A carrier profile as claimed in one of Claims 1 to 4, characterised in that one of the oppositely disposed clamping elements (7, 7.1) comprises rotation protection means (10) for the head of a screw (8) or for a nut (9).

6. A carrier profile as claimed in one of Claims 1 to 5, characterised in that the carrier profile (1) and the holding rails (3) are each provided with stop edges (2f, 3f) for the guide rails (6).

7. A carrier profile as claimed in one of Claims 1 to 6, characterised in that the guide rail (6) is preferably hardened and ground, or age-hardened and drawn, or age-hardened or drawn.

8. A carrier profile as claimed in one of Claims 1 to 7, characterised in that one of the clamping elements (7; 7.1) comprises a slot (7b), extending transversely to the T-shaped insertion groove (2), for the screws (8).

**Revendications**

1. Profilé de support comportant des rails de guidage, qui sont maintenus sur des brides associées au profilé de support, caractérisé en ce que les brides (2b) forment une rainure à emboîtement en forme de T (2) pour un premier élément de serrage (7), en ce qu'un deuxième élément de serrage (7.1) s'engage dans des rainures à emboîtement (3a) orientées l'une vers l'autre, agencées, respectivement, sur un rail d'appui (3), en ce que les deux éléments de serrage (7, 7.1) sont reliés par une vis centrale (8) et serrent deux rails de guidage (6), à chaque fois, entre une bride (2b) et un rail d'appui (3), les supports pour les rails de guidage (6) étant formés par des surfaces d'appui (2d, 3d) agencées, à distance les unes des autres, respectivement, aussi bien sur les brides (2b) que sur les rails d'appui (3), et en ce que l'élément de serrage (7) dans la rainure à emboîtement (2) en forme de T et l'élément de serrage (7.1) dans la rainure à emboîtement (3a) des rails d'appui (3) reposent respectivement sur des surfaces de pression étroites (2c, 3c), dont la ligne droite de jonction de surfaces de pression opposées l'une à l'autre s'étend entre les surfaces d'appui (2d ou 3d).

2. Profilé de support selon la revendication 1, caractérisé en ce qu'un espace libre (19) pour des roues de roulement (12) est prévu entre le profilé de support (1) et les rails de guidage (6).

3. Profilé de support selon la revendication 1 ou 2, caractérisé en ce que les éléments de serrage (7, 7.1) sont des coulisseaux.

4. Profilé de support selon la revendication 1 ou 2, caractérisé en ce que les éléments de serrage (7, 7.1) sont réalisés sous la forme de rails ou d'éléments de rail.

5. Profilé de support selon les revendications 1 à 4, caractérisé en ce que l'un des éléments de serrage (7, 7.1) opposés comporte un dispositif de protection contre la torsion (10) pour la tête d'une vis (8) ou un écrou (9).

6. Profilé de support selon l'une des revendications 1 à 5, caractérisé en ce que le profilé de support (1) et les rails d'appui (3) sont munis, respectivement, de bords d'arrêt (2f, 3f) pour les rails de guidage (6).

7. Profilé de support selon l'une des revendications 1 à 6, caractérisé en ce que les rails de guidage (6) sont de préférence trempés et rectifiés, respectivement ou étirés.

8. Profilé de support selon l'une des revendications 1 à 7, caractérisé en ce que l'un des éléments de serrage (7 ou 7.1) présente un trou oblong (7b), agencé transversalement à la rainure à emboîtement (2) en forme de T, pour les vis (8).

4

# Fig.1

# Fig.2

# Fig. 3

## Fig.4

## Fig.5